Europäisches Patentamt

European Patent Office

Office européen des brevets

(19)

(11) Publication number: **0 403 201**
**A2**

# EUROPEAN PATENT APPLICATION

(21) Application number: 90306333.7

(22) Date of filing: 11.06.90

(51) Int. Cl.⁵: **G06K 7/10, G09G 1/00**

(30) Priority: **14.06.89 US 365863**

(43) Date of publication of application:
**19.12.90 Bulletin 90/51**

(84) Designated Contracting States:
**DE FR GB**

(71) Applicant: **NCR CORPORATION**
**World Headquarters**
**Dayton, Ohio 45479(US)**

(72) Inventor: **Leyshon, Frank A.**
**519 North Seventh Street**
**Cambridge, Ohio 43725(US)**
Inventor: **McClain, Herbert Don**
**R.R. No. 2**
**Quaker City, Ohio 43773(US)**
Inventor: **Watson, David Allen**
**2775 Rix Mills Road**
**New Concord, Ohio 43762(US)**

(74) Representative: **Robinson, Robert George**
**International Patent Department NCR Limited**
**915 High Road North Finchley**
**London N12 8QJ(GB)**

(54) **Window assembly in an optical scanner.**

(57) An optical scanner has a scanning mechanism for projecting light beams through a first window (42) provided in a plate member (27) forming part of a housing for the scanning mechanism, and a second window (26) positioned above the first window (42) and located in an aperture (24) in a support member (22) for supporting items to be scanned. The first window (42) is mounted in a rubber frame (30) extending around the first window (42), the frame (30) being a press fit in an aperture (29) in the plate member (27) and serving to provide a seal between the first window (42) and the plate member (27). The second window (26) is supported by the frame (30), and is removably located in the aperture (24) in the support member (22), so that the second window (26) can be readily replaced when required.

## FIG. 4

## WINDOW ASSEMBLY IN AN OPTICAL SCANNER

The present invention relates to a window assembly in an optical scanner.

In present-day merchandising point-of-sale checkout systems, an optical bar code scanner is normally mounted in a checkout counter for projecting scanning light beams through a window in the counter for scanning a bar code label on a purchased merchandise item which is moved past the window. Prior scanners included two windows in their construction, one of which is a window positioned in the counter, while the other window provides a seal for the scanning mechanism in the scanner. Prior scanners of this kind have had disadvantages as follows. It has been found that the top window has had to be frequently replaced due to scratches on the window which prevented the scanning light beams from passing through the window, and that a seal around the bottom window was liable to deteriorate, allowing liquids to pass through the bottom window and thereby affecting the operation of the scanner. To provide a watertight installation, prior scanners had both windows glued into a cover member of the scanner which required the scanner to be removed from the counter if only the top window needed to be replaced. This resulted in an interruption of the checkout operation which negatively affected the sale of the scanners.

It is an object of the present invention to provide a window assembly in an optical scanner which is of simple construction and which alleviates the disadvantages referred to above.

According to the invention there is provided an optical scanner having a scanning mechanism for projecting light beams through a first window provided in part of a housing for said scanning mechanism, and a second window positioned above said first window and located in a support member for supporting items to be scanned, characterized in that said first window is mounted in an elastomeric frame extending around said first window, said frame fitting in a first aperture provided in said part of said housing and serving to provide a seal between said first window and said part, and in that said second window is supported by said frame and is removably located in a second aperture provided in said support member.

One embodiment of the invention will now be described by way of example with reference to the accompanying drawings, in which:

Fig. 1 is a perspective view of an optical scanner showing a scanning window assembly located in a cover member of the scanner;

Fig. 2 is a perspective view of a top plate of a scanning mechanism of the optical scanner of Fig. 1 showing the window assembly mounted in this plate;

Fig. 3 is a top view of the window assembly of the present invention mounted in the cover member of the scanner;

Fig. 4 is a sectional view taken on line 4-4 of Fig. 3; and

Fig. 5 is a side sectional view of a mould containing part of the window assembly of the present invention.

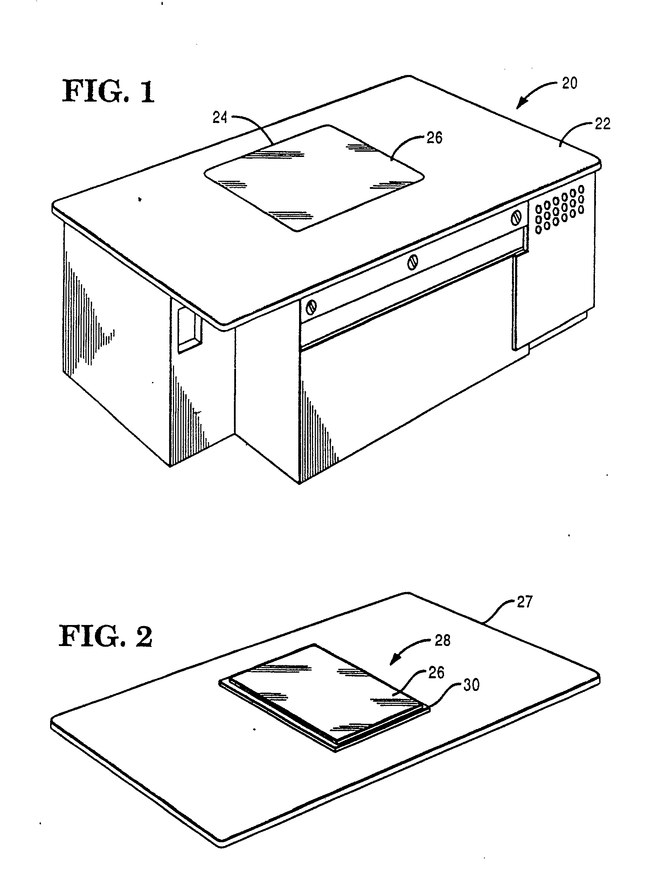

Referring now to Fig. 1, there is shown a perspective view of an optical scanner in which the present invention is utilized which comprises a box-like-structure generally indicated by the numeral 20 and which includes a cover member 22 having a centrally located aperture 24 in which is located a glass window 26 through which scanning light beams from a scanning mechanism (not shown) are projected. The scanner 20 is normally positioned within the counter top of a checkout counter (not shown) whose supporting surface is coplanar with the supporting surface of the cover member 22, enabling a purchased merchandise item having a coded label attached thereto to be moved along the supporting surface of the cover member 22 over the window 26, and in turn enabling the scanner 20 to read the label in a manner that is well known in the art.

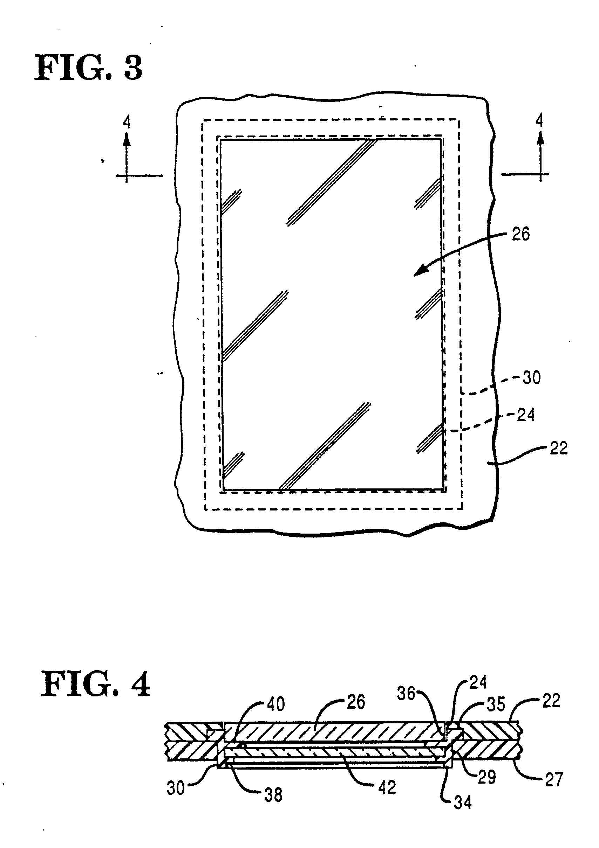

Referring now to Fig. 2, there is shown a perspective view of a window assembly 28 including the window 26 mounted in a top plate member 27 of a housing (not otherwise shown) of the scanning mechanism. The top plate member 27 is constructed of aluminium and includes an aperture 29 (Fig. 4) in which is mounted the window assembly 28 which includes a frame member 30 constructed of rubber, the glass window 26 being partially located within the frame member 30 as will be explained later.

Referring to Figs. 3 and 4, there are shown details of the frame member 30. As best shown in Fig. 4, the frame member 30 comprises a rectangular shaped frame composed of four rail portions 34 each having an overhanging portion 35 extending around the circumference of the frame member 30 forming a recessed portion 36 (Fig. 4) within which is slidably positioned the glass window 26. Extending around the interior edge of the frame member 30 are a pair of inwardly extending ridge portions 38, 40 which capture and hold a window member 42. The window member 42 may be composed of an acrylic plastic such as Plexiglas which is a trademark of the Rohm and Haas Co. of Philadelphia, Penn. The glass window 26 protects the window member 42 from being scratched during operation of the scanner by merchandise items being moved across the glass window 26.

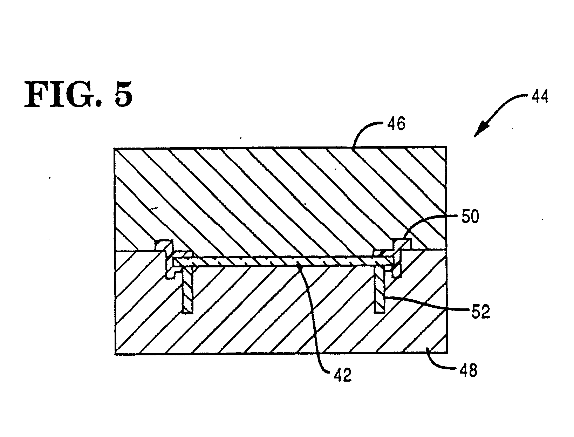

Referring now to Fig. 5, there is shown a side sectional view of a mould used in moulding the frame member 30 around the window member 42 after which the assembled frame member is press fitted into the aperture 29 in the plate member 27 (Fig. 4). The mould is generally indicated by the numeral 44 and comprises an upper steel shell member 46 and a lower steel shell member 48 which, when assembled as shown in Fig. 5, form the cavity 50 shaped in the form of the frame member 30 (Figs. 2 and 3). Prior to the molding operation, the window member 42 is positioned within the lower shell member 48 by means of pins 52 located at each corner of the member 42. After the window member 42 has been moulded into the frame member 30, the frame member 30 is press fitted into the aperture 29 (Fig. 4) in the top plate member 27 after which the cover member 22 is mounted on the top plate member 27. The glass window 26 is then removably located within the aperture 24 (Fig. 1) in the cover member 22 and in the recess 36 in the frame member 30.

It can thus be seen that there has been provided by the present invention a simple and low cost method of mounting a window assembly in an optical scanner which allows the upper scanning window to be easily removed, while the rubber frame 30 in which the lower window member 42 is mounted provides an environmental seal for the scanner. A further advantage of the window assembly described above is that the assembly of the frame 30 and window member 42 can also be readily replaced, if the seal provided by the frame 30 should deteriorate.

## Claims

1. An optical scanner (20) having a scanning mechanism for projecting light beams through a first window (42) provided in part (27) of a housing for said scanning mechanism, and a second window (26) positioned above said first window and located in a support member (22) for supporting items to be scanned, characterized in that said first window (42) is mounted in an elastomeric frame (30) extending around said first window, said frame fitting in a first aperture (29) provided in said part (27) of said housing and serving to provide a seal between said first window and said part, and in that said second window (26) is supported by said frame and is removably located in a second aperture (24) provided in said support member (22).

2. An optical scanner according to claim 1, characterized in that said frame (30) is press fitted into said first aperture (29).

3. An optical scanner according to either claim 1 or claim 2, characterized in that said frame (30) is moulded and said first window (42) is moulded into said frame (30) at the time said frame is moulded.

4. An optical scanner according to any one of the preceding claims, characterized in that said first window (42) is of an acrylic plastic material.

5. An optical scanner according to any one of the preceding claims, characterized in that said frame (30) is provided with first and second inwardly projecting ridge portions (38,40) each of which extends around the inner periphery of said frame, and in that the periphery of said first window (42) is held between said first and second ridge portions.

6. An optical scanner according to any one of the preceding claims, characterized in that said second window (26) is positioned in a recessed portion (36) of said frame (30).

7. An optical scanner according to any one of the preceding claims, characterized in that said frame (30) is of rubber.

## FIG. 1

## FIG. 2

# FIG. 3

# FIG. 4

# FIG. 5